Europäisches Patentamt

(19) European Patent Office

Office européen des brevets

(11) EP 1 000 345 B1

(12) EUROPÄISCHE PATENTSCHRIFT

(45) Veröffentlichungstag und Bekanntmachung des Hinweises auf die Patenterteilung:
07.05.2003 Patentblatt 2003/19

(51) Int Cl.⁷: G01N 21/64

(21) Anmeldenummer: 98945125.7

(86) Internationale Anmeldenummer:
PCT/EP98/04779

(22) Anmeldetag: 30.07.1998

(87) Internationale Veröffentlichungsnummer:
WO 99/006821 (11.02.1999 Gazette 1999/06)

(54) **VERFAHREN UND VORRICHTUNG ZUR REFERENZIERUNG VON FLUORESZENZINTENSITÄTSSIGNALEN**

METHOD AND DEVICE FOR REFERENCING FLUORESCENCE INTENSITY SIGNALS

PROCEDE ET DISPOSITIF POUR REFERENCER DES SIGNAUX D'INTENSITE DE FLUORESCENCE

(84) Benannte Vertragsstaaten:
AT BE CH DE DK ES FR GB GR IE IT LI NL

(30) Priorität: 01.08.1997 DE 19733341
02.07.1998 DE 19829657

(43) Veröffentlichungstag der Anmeldung:
17.05.2000 Patentblatt 2000/20

(73) Patentinhaber: PreSens Precision Sensing GmbH
86633 Neuburg a.d. Donau (DE)

(72) Erfinder: KLIMANT,Ingo
D-93051 Regensburg (DE)

(74) Vertreter: Weiss, Wolfgang, Dipl.-Chem. Dr. et al
Weickmann & Weickmann
Patentanwälte
Postfach 86 08 20
81635 München (DE)

(56) Entgegenhaltungen:
EP-A- 0 354 204          WO-A-92/04618
WO-A-95/10766          WO-A-97/10495
US-A- 5 580 749          US-A- 5 618 732

**Beschreibung**

Die Erfindung betrifft ein Verfahren und eine in einem Spektralphotometer verwendbare Vorrichtung zur fluorometrischen Bestimmung eines biologischen, chemischen oder physikalischen Parameters einer Probe unter Verwendung zumindest zweier verschiedener Leuchtstoffe, deren erster zumindest in der Lumineszenzintensität auf den Parameter anspricht und deren zweiter zumindest in der Lumineszenzintensität und der Abklingzeit auf den Parameter nicht anspricht.

Insbesondere betrifft die Erfindung ein neues Konzept zur optischen Detektion von chemischen Parametern mit Hilfe von optischen Sensoren, auf der Basis von Phasenverschiebungs- und zeitaufgelösten Messungen. Die verwendeten Modulationsfrequenzen liegen zwischen 0,5 und 5 MHz und sind mit preiswerten optischen Halbleiterbauteilen erfaßbar.

Aus der Literatur und der Praxis optischer Sensoren ist bekannt, daß bei Lumineszenzmessungen die Bestimmung der Abklingzeit anstelle der Intensität als Meßgröße entscheidende praktische Vorteile aufweist. Diese Größe wird durch Schwankungen des optischen Systems nur unwesentlich oder im besten Fall überhaupt nicht beeinflußt. Sowohl Veränderungen der Intensität der Lichtquelle und der Empfindlichkeit des Photodetektors als auch Signalverluste durch Biegung von Fasern oder Beeinflussung der Signalintensität durch Veränderung der Geometrie des Sensors haben keine Auswirkungen auf das Meßsignal. Dies gilt auch für undefinierte optische Eigenschaften der Probe (wie Trübung, Eigenfärbung und Brechungsindex), die zu Problemen bei Intensitätsmessungen führen können.

Desweiteren gibt es in vielen Fällen eine weitgehende Unabhängigkeit des Meßsignals von der Konzentration des Indikators in der sensitiven Schicht. Deswegen sind Photozersetzung und Auswaschen in geringen Maßen wenig kritisch.

In der Literatur wurden eine Vielzahl von Meßprinzipien vorgeschlagen, um chemische Parameter auf Abklingzeitbasis zu messen. Eine der am häufigsten angewendeten Methoden ist die dynamische Lumineszenzlöschung, wobei der angeregte Zustand eines Lumineszenzindikators durch den Analyten strahlungslos deaktiviert wird. Auf dieser Grundlage erfolgt die optische Messung von molekularem Sauerstoff, sowie der Nachweis von Halogenid- und Schwermetallionen (1).

Eine weitere Möglichkeit der Deaktivierung nutzt den photoinduzierten Elektronentransfer in einem einzelnen Indikatormolekül. Bei diesem Effekt (kurz PET genannt) liegt der Lumineszenzindikator in verschiedenen Formen vor, von denen nur eine (saure Form oder mit gebundenem Metallion) hoch lumineszierend ist und eine lange Lebensdauer aufweist. In der zweiten Form (basische Form oder ohne gebundenes Metallion) besitzt der Indikator ein freies Elektronenpaar, welches den angeregten Zustand strahlungslos deaktivieren kann. Als Folge verringert sich sowohl die Abklingzeit als auch die Lumineszenzquantenausbeute. Dieses Prinzip kann Anwendung finden für die optische Bestimmung des pH-Wertes oder in der optischen Ionensensorik (2).

Eine weitere vorgeschlagene Möglichkeit der Abklingzeitmessung besteht darin, daß bestimmte pH-Indikatoren im protonierten und deprotonierten Zustand mit unterschiedlicher Intensität und unterschiedlicher, aber definierter Abklingzeit lumineszieren. Dabei handelt es sich z.B. um Derivate von Seminaphthofluorescein. In diesem Fall wird die Lumineszenz der sauren und der basischen Form simultan vermessen. Aus dem jeweiligen (pH abhängigen) Verhältnis der beiden Intensitäten ergibt sich dabei eine mittlere Abklingzeit, die gemessen werden kann (3). Voraussetzung bei dieser Methode ist, daß beide Formen eines Indikators lumineszieren, und ihre Absorptions- und Emissionsspektren deutliche Überlappungsbereiche aufweisen.

Es ist wichtig anzumerken, daß bei den meisten der bisher zitierten Meßprinzipien die gemessenen Abklingzeiten in der Regel im Bereich von wenigen Nanosekunden liegen. Die genaue Messung von Abklingzeiten im unteren Nanosekundenbereich ist aber instrumentell sehr aufwendig und erfordert neben sehr schnellen Schaltungen und hohen Modulationsfrequenzen auch schnelle Lichtquellen und Detektoren. Die Entwicklung von preiswerten Meßgeräten für diese Art von Sensoren, auf der Basis von optischen Halbleiterkomponenten wie Leuchtioden und Photodioden scheint deswegen in naher Zukunft ziemlich ausgeschlossen. Preiswerte Meßgeräte sind aber für eine weitgefächerte Anwendung optischer Sensoren unabdingbar. Deswegen besteht ein großes Interesse an Abklingzeitsensoren, deren Meßbereich sich im Bereich von Mikrosekunden oder sogar Millisekunden bewegt. Solche Sensoren wurden bisher fast ausschließlich für die optische Sauerstoffmessung bis zur Praxisreife entwickelt, wobei Indikatoren mit Abklingzeiten bis zu einigen Millisekunden zum Einsatz kommen.

Ein kürzlich eingeschlagener Weg, neue langlebige Abklingzeitsensoren zu entwickeln, nutzt den strahlungslosen Energietransfer zwischen einem lumineszierenden Donormolekül, dessen photophysikalische Eigenschaften durch den Analyten nicht beeinflußt werden, auf einen für den Analyten sensitiven Farbindikator, der als Akzeptor bezeichnet wird. Dessen Absorptionsspektrum muß abhängig von der jeweiligen Analytkonzentration unterschiedlich stark mit dem Emissionsspektrum des Donors überlappen. Als lumineszierender Donor können Übergangsmetallkomplexe mit Ruthenium(II), Ruthenium(I) oder Osmium und Iridium als Zentralatom eingesetzt werden. Diese Verbindungen zeichnen sich durch lange Lebenszeiten (einige 100 nsec bis wenige Mikrosekunden) und hohe Quantenausbeuten aus. Dieser Weg wurde erstmalig von Lakowicz vorgeschlagen und kürzlich für optische pH-Sensoren umgesetzt, wobei die analoge Realisierung von Optoden für die pCO$_2$-, NH$_3$- und die Ionendetektion grundsätzlich möglich ist (4,5).

Ein gravierendes Problem beim praktischen Einsatz solcher Sensoren besteht darin, daß die Rate des Energietransfers und damit die meßbare mittlere Abklingzeit zum einen signifikant vom Abstand und der Positionierung von Donor und Akzeptormolekül abhängig ist, zum anderen aber auch von der Konzentration des Akzeptors in der Matrix. Aus diesem Grund führt jede Veränderung der Verteilung und des Abstands der Indikatoren in der Matrix zu Veränderungen in der Kennlinie der Sensoren. Insbesondere die Quellung der Matrix stellt ein erhebliches Problem dar.

Ein weiteres Problem ist der Einfluß von Sauerstoff auf die Sensoren. Da die Lumineszenz der eingesetzten langlebigen Donoren von Sauerstoff zum Teil beträchtlich gelöscht wird, muß die Sauerstoffkonzentration mitgemessen und das Meßsignal korrigiert werden. Zusätzlich entsteht bei diesem Prozeß in der Membran reaktiver Singlettsauerstoff, der die Photozersetzung der immobilisierten Indikatoren beschleunigt. Damit wird sowohl die Lager- als auch die Langzeitstabilität der Sensoren herabgesetzt. Damit geht natürlich einer der klassischen Vorteile der Abklingzeitmessung verloren.

Aus der US 5,102,625 ist eine Vorrichtung der eingangs genannten Art bekannt. Dort werden mittels zweier separater Meßkanäle die Intensitäten zweier Leuchtstoffe separat gemessen. Deren Intensitätsverhältnis wird als Endsignal für die Messung des Parameters verwendet. Die Abklingzeiten der Leuchtstoffe gehen in die Messung nicht ein. Die beiden Leuchtstoffe haben unterschiedliche Spektralbereiche. US-A-5,618,732 zeigt ein Verfahren, bei dem zur internen Kalibrierung eines Messsystems zwei Leuchtstoffe unterschiedlicher Abklingzeit verwendet werden.

Aufgabe der Erfindung ist es daher, ein Verfahren und eine Vorrichtung zur fluorometrischen Bestimmung des Parameters einer Probe anzugeben, das bei hoher Meßgenauigkeit mit geringerem apparativen Aufwand auskommt.

Zur Lösung der Aufgabe wird ein Verfahren mit den Merkmalen von Anspruch 1 und eine Vorrichtung mit den Merkmalen von Anspruch 12 vorgeschlagen.

Die Erfindung beschreibt ein neues Meßprinzip, welches die fluorometrische Bestimmung verschiedener chemischer, physikalischer und biologischer Parameter mit Hilfe von zeitaufgelösten- und Phasenmodulationstechniken ermöglicht. Die Erfindung erlaubt es, das Intensitätssignal der meisten in der Literatur beschriebenen Fluoreszenzsensoren durch Zumischen eines langlebigen Leuchtstoffs sehr effektiv zu referenzieren. Dazu werden zwei verschiedene Leuchtstoffe gemeinsam im Sensor co-immobilisiert. Die Summe aus einem Lumineszenzsignal mit konstanter langlebiger Abklingzeit (mind. einige hundert Nanosekunden) und einem kurzlebigen Fluoreszenzsignal wird gemessen. Während die langlebige Lumineszenz in ihren Parametern vom Analyten nicht beinflußt wird, verändert sich die Intensität des co-immobilisierten kurzlebigen Leuchtstoffs in Abhängigkeit von der jeweiligen Analytkonzentration. Da die durch Phasenmodulationstechniken ermittelte Phasenverschiebung $\Phi_m$ nur vom Verhältnis der Intensitätsanteile der beiden einzelnen Leuchtstoffe abhängt, spiegelt sich in diesem Parameter direkt die Intensität des auf den Parameter ansprechenden Leuchtstoffs wieder. Damit handelt es sich bei der Erfindung um ein neues Verfahren der internen Referenzierung der Signalintensität von Fluoreszenzleuchtstoffen, ohne daß eine zweite Lichtquelle oder ein zweiter Photodetektor benötigt wird. Unter der Voraussetzung, daß die Verteilung der beiden Leuchtstoffe beim Herstellungsprozess konstant gehalten wird, ist $\Phi_m$ ausschließlich vom zu bestimmenden physikalischen oder chemischen Parameter abhängig, während Schwankungen im optoelektronischen System, Verlusten in den Lichtleitern und den optischen Eigenschaften der Probe das Signal nicht beeinflussen.

Bevorzugt ist, daß beide Leuchtstoffe im gleichen Wellenlängenbereich Licht absorbieren und damit mit der gleichen Lichtquelle zur Lumineszenz angeregt werden können. Bevorzugt liegen die Emissionsspektren im gleichen Spektralbereich. So ist es z.B. möglich, beide Leuchtstoffe mit blauem Licht bei einer Wellenlänge von 450 nm anzuregen, wobei ein Leuchtstoff grünes Licht bei 520 nm und der zweite rotes Licht bei 600 nm emittiert, da beide Signale trotzdem mit demselben Detektor gemessen werden können. Es ist aber auch möglich, die Lumineszenz zweier Leuchtstoffe simultan zu messen, die sich in ihren Emissionsspektren deutlich voneinander unterscheiden.

Das beschriebene Meßverfahren hat den Vorteil, daß der langlebige Leuchtstoff keine analytspezifische Reaktion aufweisen muß, sondern einzig als Träger eines konstanten Untergrundsignals mit langer Abklingzeit fungiert, welches durch den kurzlebigen Leuchtstoff moduliert wird. Aus diesem Grund kommt eine Vielzahl von in der Literatur beschriebenen phosphoreszierenden Verbindungen für diesen Zweck in Frage.

Der langlebige Leuchtstoff braucht nicht mit der Probe, dem Analyten und dem Fluoreszenzindikator in Wechselwirkung zu treten und kann deswegen in einer Form immobilisiert werden, in der er für sämtliche Probenkomponenten inert ist und damit potentielle Interferenzen durch chemische Parameter von vornherein ausgeschlossen sind.

Die Erfindung wird nachfolgend anhand von Ausführungsbeispielen erläutert.

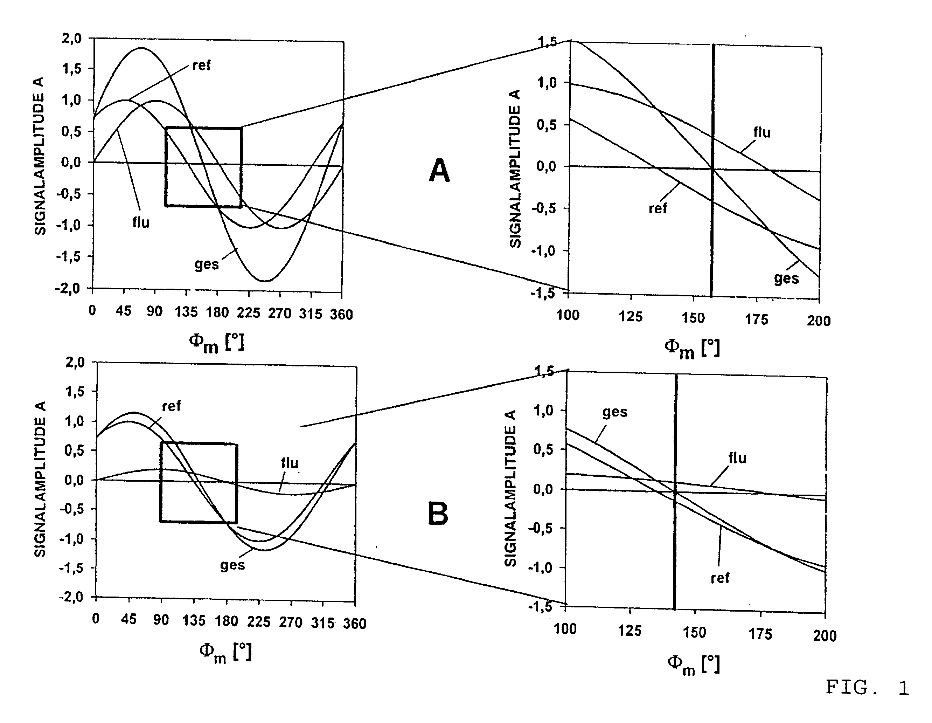

Figur 1 zeigt die Abhängigkeit des gemessenen Phasenwinkels $\Phi_m$ von dem Verhältnis der Intensität des Fluoreszenzindikators und des Referenzleuchtstoffes; A hohes Fluoreszenzsignal, B niedriges Fluorszenzsignal. Es bezeichnen: flu = variables Fluoreszenzsignal; ref = konstantes Referenzsignal; ges = gemessenes Gesamtsignal;

Figur 2 zeigt einen berechneten Zusammenhang zwischen dem gemessenen Phasenwinkel $\Phi_m$ sowie cot ($\Phi_m$) und dem Amplitudenverhältnis R der beiden Leuchtstoffe;

Figur 3 zeigt spektrale Eigenschaften eines geeigneten Paares von Fluoreszenzindikator und Referenzleuchtstoff. Die optimalen spektralen Fenster für die Anregung des Lumineszenzsignals und die Messung des emittierten Lichtes sind schraffiert eingezeichnet;

Figur 4 zeigt eine zeitaufgelöste Messung des Verhältnisses der Signalintensität während des Anregungsimpulses ($I_1$) und während des Abklingens der Lumineszenz ($I_2$), wobei das Verhältnis R von der Gesamthöhe des Signals unabhängig ist und nur eine Funktion des zu bestimmenden chemischen Parameters darstellt;

Figur 5 zeigt pH-Calibrierkurven eines pH-Sensors nach Beispiel 1 mit unterschiedlicher Menge an HPTS (A: wenig HPTS; B: viel HPTS), gemessen als Phasenverschiebung bei einer Modulationsfrequenz von 80 kHz. Als Lichtquelle dient hier eine blaue LED und als Detektor eine Photodiode; und

Figur 6 zeigt vier Kombinationsmöglichkeiten des kurzlebigen chemisch sensitiven Leuchtstoffs (A) und des inerten langlebigen Leuchtstoffs (B) in einem optischen Sensor;

Als für den Analyten inerte Leuchtstoffe mit langen Abklingzeiten kommen z.B. in Frage:

- Übergangsmetallkomplexe mit Ruthenium (II), Rhenium (I) oder Osmium und Iridium als Zentralatom und Diiminliganden;
- phosphoreszierende Porphyrine mit Platin, Palladium, Lutetium oder Zinn als Zentralatom;
- phosphoreszierende Komplexe der Seltenerden wie Europium, Dysprosium oder Terbium;
- phosphoreszierende Kristalle wie Rubin, Cr-YAG, Alexandrit oder phosphoreszierende Mischoxide wie Magnesiumfluorogermanat

Als kurzlebige fluoreszierende Leuchtstoffe kommen alle Farbstoffe in Frage, deren Anregungs- und Emissionsspektrum mit einem der oben zitierten langlebigen Leuchtstoffe überlappt und deren Fluoreszenzintensität vom zu bestimmenden Parameter abhängig ist.

Beispiele für potentiell mögliche Leuchtstoff- bzw. Luminophor/Fluorophorpaare sind:

Ruthenium(II)-(tris-4,7-diphenyl-1,10-phenanthrolin) / HPTS
Ruthenium(II)-(tris-4,7-diphenyl-1,10-phenanthrolin) / Fluorescein
Ruthenium(II)-(tris-4,7-diphenyl-1,10-phenanthrolin) / Rhodamin B
Ruthenium(II)-(tris-4,7-diphenyl-1,10-phenanthrolin) / Rhodamin B-octadecylester
Ruthenium(II)-(tris-4,7-diphenyl-1,10-phenanthrolin) / Hexadecyl-Acridinorange
Europium(III)-tris-theonyl-trifluormethylacetonat / Hydroxymethyfcoumarin
Platin(II)-tetraphenylporphyrin / Rhodamin B-octadecylester
Platin(II)-tetraphenylporphyrin / Rhodamin B
Platin(II)-tetraphenylporphyrin / Naphtofluorescein
Platin(II)-tetraphenylporphyrin / Sulforhodamin 101
Platin(II)-octaethylporphyrin / Eosin
Platin(II)-octaethylporphyrin / Thionin
Platin(II)-octaethylketoporphyrin / Nilblau
Cr(III)-YAG / Nilblau
Cr(III)-YAG / Naphtofluorescein

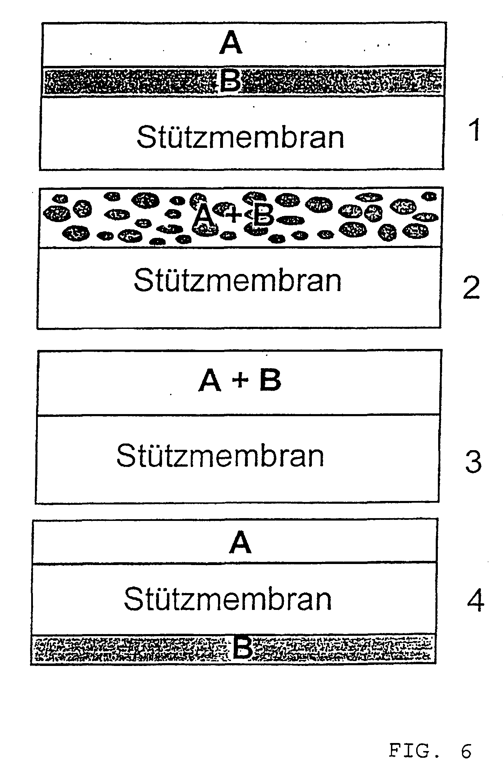

Der langlebige Leuchtstoff kann auf unterschiedliche Weise in den Sensor integriert werden (Abb. 6):

- durch direktes Lösen des Leuchtstoffs in der analytsensitiven Schicht (Fig. 6, Bsp.3)
- durch Einbau in ein Polymer, welches als Grundierung für die Sensorschicht dient (Fig. 6, Bsp. 1)
- durch Einbau in ein Polymer, welches in Mikro- oder Nanopartikeln in die sensitive Schicht dispergiert wird (Fig. 6, Bsp. 2)
- durch Einbau von lumineszierenden Farbstoffen in Sol-Gel Glas mit anschließendem Sintern, Pulverisieren und Dispergieren des Glases in der Sensorschicht (Fig. 6, Bsp. 2)
- durch Verwendung pulverisierter Phosphore, die in der sensitiven Schicht dispergiert werden (Fig. 6; Bsp. 2)
- durch Beschichtung der Außenseite einer Sensorfolie, ohne Kontakt zur Probe (Fig. 6, Bsp. 4)
- durch kovalente oder elektrostatische Bindung des Fluoreszenzindikators an die Oberfläche von Leuchtstoffpartikeln, die entweder in eine Polymerschicht dispergiert werden oder direkt in der Probe verteilt werden
- durch Dispersion von Partikeln in die Probe, in welcher der Fluoreszenzindikator in gelöster Form vorliegt.

Es ist wichtig zu erwähnen, daß mit Hilfe von Phasenmodulationstechniken bei Frequenzen im kHz-Bereich bei dieser Art von Sensoren immer nur eine mittlere Phasenverschiebung ermittelt werden kann. Ein Aufsplitten in beide Abklingzeitkomponenten ist zwar prinzipiell möglich, durch die benötigten hohen Frequenzen aber meßtechnisch aufwendig. Aufgrund der deutlichen Unterschiede in den Abklingzeiten der beiden co-immobilisierten Indikatoren ergibt die zeitaufgelöste Messung, bei der nach einem Anregungslichtpuls ausschließlich das Abklingverhaiten des Lumineszenzsignals nach Ausschalten des Anregungspulses ermittelt wird, in vielen Fällen keinen nutzbringenden Parameter, da die kurzlebige Komponente zu schnell abklingt und meßtechnisch nur mit hohem Aufwand erfaßt werden kann.

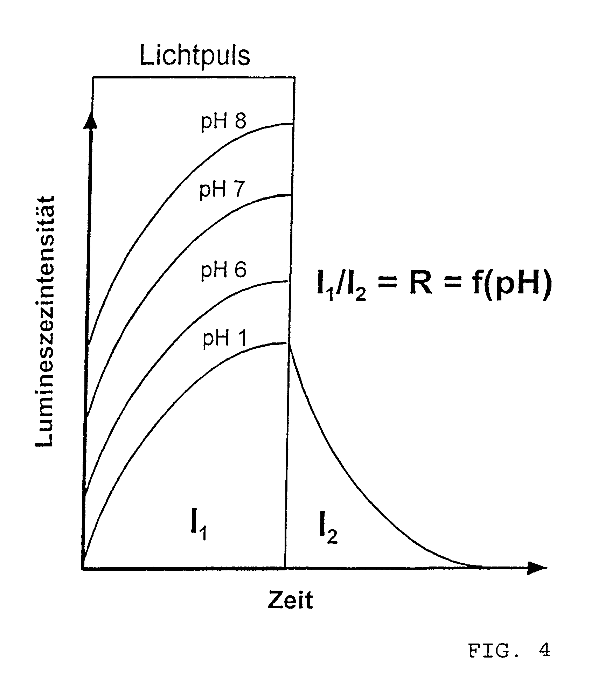

Auch ist es möglich, die Signalintensität während des Anregungspulses und in der Abklingphase separat zeitaufgelöst zu messen und das Verhältnis dieser beiden Signale R zu berechnen. Wie aus Figur 4 hervorgeht, hängt dieses Verhältnis ausschließlich vom Intensitätsverhältnis R der beiden Lumineszenzkomponenten ab und ist vollständig unabhängig von der Gesamtintensität des Signals.

Desweiteren kann mit Phasenmodulationstechniken die mittlere Phasenverschiebung des Lumineszenzsignals gemessen werden. Die Meßfrequenz wird dabei auf die Abklingzeit des Leuchtstoffs abgestimmt und liegt zwischen 0,5 und 100 kHz. Wie im folgenden gezeigt wird, geht aus der Gleichung (1) hervor, daß der gemessene Phasenwinkel $\Phi_m$ nur vom Verhältnis der beiden Signalintensitäten, aber nicht von der Absoluthöhe des Signals abhängt und somit die Referenzierung der Intensität des kurzlebigen Fluoreszenzanteils ermöglicht.

**Voraussetzung 1:**

Additive Überlagerung der Signale (Index ref = Referenzsignal, Index flu = Fluoreszenzsignal; Index m = Meßgröße)

$$A_m \cdot \cos\Phi_m = A_{ref} \cdot \cos\Phi_{ref} + A_{flu} \cdot \cos\Phi_{flu}$$
$$A_m \cdot \sin\Phi_m = A_{ref} \cdot \sin\Phi_{ref} + A_{flu} \cdot \sin\Phi_{flu}$$

**Voraussetzung 2:**

Die längere Abklingzeit ist sehr viel größer als die kürzere Abklingzeit:

$$\tau_{ref} \gg \tau_{flu}$$

Wenn die Modulationsfrequenz so gewählt ist, daß sie für $\tau_{ref}$ optimal ist, d.h.

$$\tan\Phi_{ref} = 2\pi \cdot f_{mod} \cdot \tau_{ref} = 1$$

ergibt sich für $\Phi_{flu}$:

$$\tan\Phi_{flu} = 2\pi \cdot f_{mod} \cdot \tau_{flu} = \frac{2\pi \cdot \tau_{flu}}{2\pi \cdot \tau_{ref}} = \frac{\tau_{flu}}{\tau_{ref}}$$

mit der Voraussetzung ergibt sich für den Winkel $\Phi_{flu}$:

$$\tan\Phi_{flu} = \frac{\tau_{flu}}{\tau_{ref}} \xrightarrow{\ \tau_{flu} \ll \tau_{ref}\ } 0 \Rightarrow \Phi_{flu} \to 0$$

**Voraussetzung 3:**

Die Abklingzeit des Farbstoffs mit der längeren Abklingzeit ist für die interessierende Messung konstant:

$$\tau_{ref} = \text{kons}\tan t \Rightarrow \tan\Phi_{ref} = \text{kons}\tan t \Rightarrow \Phi_{ref} = \text{kons}\tan t$$

Damit vereinfachen sich die additiven Gleichungen zu:

$$A_m \cdot \cos\Phi_m = A_{ref} \cdot \cos\Phi_{ref} + A_{flu}$$

$$A_m \cdot \sin\Phi_m = A_{ref} \cdot \sin\Phi_{ref}$$

Teilt man die erste Gleichung durch die zweite, ergibt sich:

$$\frac{A_m \cdot \cos\Phi_m}{A_m \cdot \sin\Phi_m} = \cot\Phi_m = \frac{A_{ref} \cdot \cos\Phi_{ref} + A_{flu}}{A_{ref} \cdot \sin\Phi_{ref}} = \frac{A_{ref}}{A_{ref}} \cdot \left( \frac{\cos\Phi_{ref} + A_{flu}/A_{ref}}{\sin\Phi_{ref}} \right)$$

$$\cot\Phi_m = \frac{\cos\Phi_{ref} + A_{flu}/A_{ref}}{\sin\Phi_{ref}} = \cot\Phi_{ref} + \frac{1}{\sin\Phi_{ref}} \cdot A_{flu}/A_{ref} \qquad (1)$$

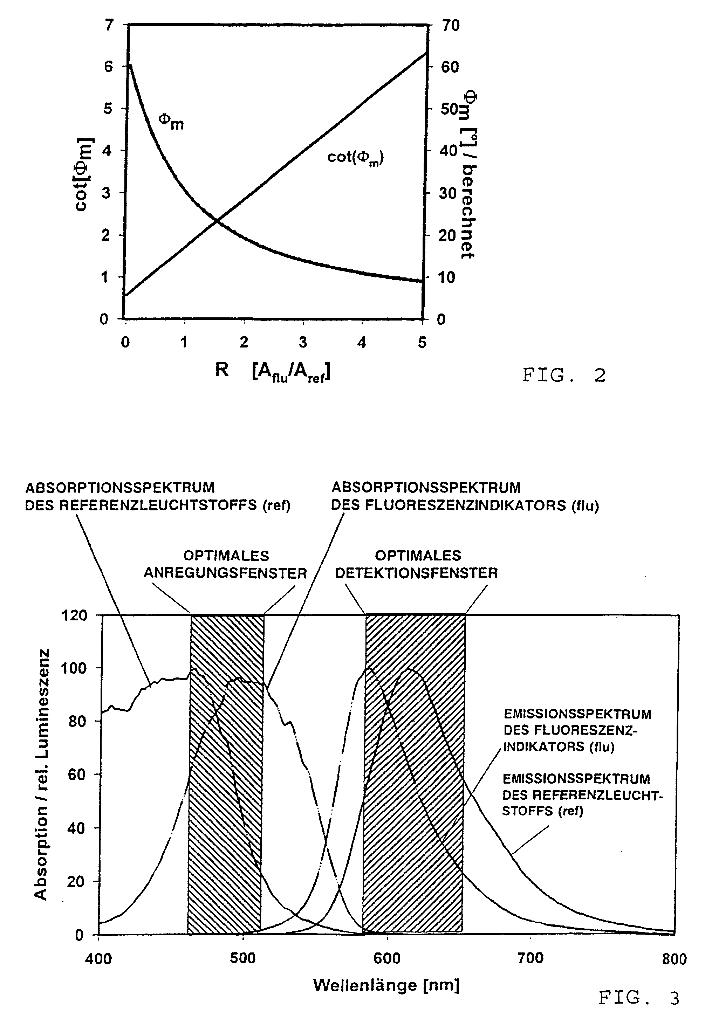

Da die Auftragung von $\cot\Phi_m$ linear das Amplitudenverhältnis wiederspiegelt, ergibt sich ein linearer Zusammenhang zwischen dem Cotangens des gemessenen Phasenwinkels $\Phi_m$ und dem Amplitudenverhältnis R (und damit auch Intensitätsverhältnis) der beiden Leuchtstoffe (siehe Figur 2).

$\cot\Phi_m$ drückt ein Intensitätsverhältnis aus, ohne daß zwei Intensitätssignale separat gemessen werden müssen.

Wesentliche Vorteile sind:

- Ein sehr geringer Synthese- und Optimierungsaufwand bei der Herstellung neuer Sensoren.
- Einfache Umstellung bereits optimierter Fluoreszenzsensoren auf Abklingzeitmessung durch einfaches Zumischen des langlebigen Leuchtstoffs.
- Für ein Feld von Sensoren für unterschiedliche Analyten kann problemlos immer der gleiche langlebige Leuchtstoff verwendet werden. Damit lassen sich verschiedene Sensoren mit demselben optoelektronischen System auswerten.
- Da die Form der Kalibrierkurve nur vom Verhältnis der beiden Intensitäten abhängt, kann der Empfindlichkeitsbereich eines einzelnen Sensors allein schon durch Veränderung der zugegebenen Menge an Leuchtstoff optimiert werden.
- dasselbe kann durch eine optimale Auswahl der spektralen Fenster sowohl auf der Seite der Anregung, als auch der Emission realisiert werden.
- Die Querempfindlichkeit langlebiger Lumineszenz gegenüber Sauerstoff kann ausgeschaltet werden, indem die Indikatoren in Materialien eingebaut werden, die für Gase nicht zugänglich sind.
- Werden phosphoreszierende Feststoffe oder in Glas eingebaute Leuchtstoffe verwendet, wird jegliche Beeinflussung des Signals durch chemische Leuchtstoffparameter in der Probe vollständig ausgeschlossen.
- Weil Sauerstoff die Lumineszenz nicht löschen kann, ensteht in der Membran kein reaktiver Singlettsauerstoff. In der Folge verringert sich die Photozersetzung und die Stabilität der Sensoren verbessert sich.
- Der Einbau der langlebigen Leuchtstoffe in eine Glasmatrix oder als Feststoff verhindert deren Auswaschen vollständig. Desweiteren ist ihre Photostabilität außergewöhnlich hoch.
- Während bei Meßprinzipien, bei denen der Analyt den angeregten Zustand des langlebigen Leuchtstoffs deaktiviert (wie PET-Effekt, dynamischer Löschung oder Energietransfer), die Abnahme der mittleren Abklingzeit, immer parallel mit einer Abnahme der Signalintensität verbunden ist, was zu einer Verschlechterung des Signal/Rausch Verhältnisses führt, wird bei dieser Art von Sensoren bei Abnahme der Abklingzeit die Signalintensität größer. Die Folge ist ein wesentlich besseres Signal/Rausch Verhältnis über den gesamten Meßbereich.

Da die Kennlinie dieser Sensoren einzig vom Verhältnis der Signalanteile beider Indikatoren abhängt, sollen jedoch folgende Bedingungen erfüllt sein:

1) keiner der beiden Indikatoren darf im Verlauf der Messung auswaschen;
2) die beiden Indikatoren dürfen während der Messung nicht unterschiedlich schnell durch Lichteinwirkung zersetzt werden;
3) das Konzentrationsverhältnis der beiden Indikatoren muß beim Herstellen der Membranen konstant gehalten werden;
4) die Abklingzeit des langlebigen Leuchtstoffs muß immer konstant sein.

Für viele Sensoren können diese Bedingungen problemlos erfüllt werden.
Beispiele für optische Sensoren basierend auf diesem Prinzip:

**pH-Sensor**

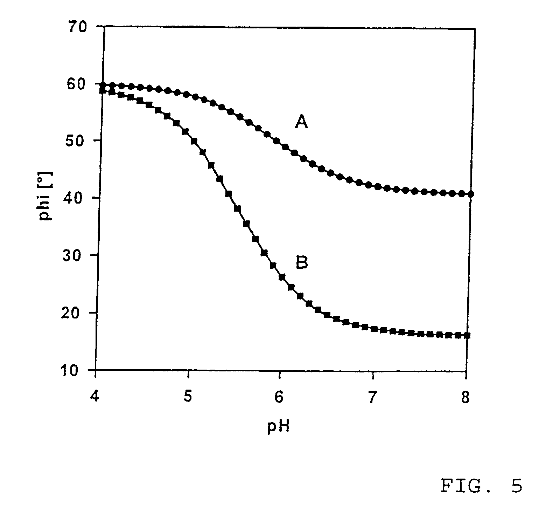

- HPTS adsorbiert an Zellulose mit quarternären Ammoniumgruppen und eingebaut in Poly-hydroxyethylmethacrylat (PHEMA) Hydrogel
- $Ru(phen)_3Cl_2$ in Sol-Gel (gesintert, gemahlen und im Hydrogel dispergiert) (Figur 5 zeigt die Kalibrierkurve dieses Sensors, gemessen als Phasenverschiebung bei einer Frequenz von 80 kHz)

**pH-Sensor**

- Aminofluorescein kovalent gekoppelt an Sol-Gel Partikel mit eingebautem $Ru(phen)_3Cl_2$ (gesintert, gemahlen und in Hydrogel dispergiert)

**$CO_2$-Sensor**

- $HPTS-CTA_3$ Ionenpaar in Ethylcellulose gelöst mit Tetraoctylammoniumhydroxid als Puffer (nach 6)
- Ru(4,7-diph-1,10-phen) in PVC als äußere Beschichtung einer Sensorfolie

**$NH_3$-Sensor**

- Rhodamin B gelöst in PVC mit NPOE (nach 7)
- Pt(II)-tetra-pentafluorophenyl-porphyrin in PVC als äußere Beschichtung einer Sensorfolie

**Kalium-Sensor**

- lipophilisiertes Nilblau gelöst in PVC mit Weichmachern (nach 8)
- Pt(II)-octaethylketoporphyrin in PVC als äußere Beschichtung

Die Erfindung erlaubt somit eine optische Bestimmung eines chemischen biologischen oder physikalischen Parameters einer Probe mit Hilfe eines optischen Sensors. Im Sensor liegen zwei Lumineszenzindikatoren co-immobilisiert vor, von denen der eine Indikator als Träger eines Untergrundlumineszenzsignals fungiert, welches durch eine lange Lumineszenzlebenszeit (vorzugsweise im Bereich von mindestens 100 Nanosekunden bis zu einigen Millisekunden) gekennzeichnet ist, und welches weder in seiner Intensität noch in seiner Abklingzeit vom zu messenden Parameter beeinflußt wird. Der zweite Indikator weist eine kürzerlebige Fluoreszenz vorzugsweise im Bereich von einigen Nanosekunden auf, welche das langlebige Lumineszenzsignal überlagert, und deren Intensität eine Funktion des zu messenden Parameters ist. Mit Hilfe von Phasenmodulations- oder zeitaufgelösten Meßmethoden wird dabei eine Referenzgröße bestimmt, welche das Verhältnis der beiden einzelnen Lumineszenzintensitätsanteile ausdrückt, wobei diese Referenzgröße unabhängig von der Gesamtintensität des Lumineszenzsignals ist, und damit die Referenzierung der kurzlebigen vom Analyten abhängigen Fluoreszenzkomponente ermöglicht.

**Zitate**

1. O.S. Wolfbeis, *Fiber Optic Chemical Sensors and Biosensors Vol. II,* CRC press, 1991
2. S. Draxler, M.E. Lippitsch, *Sens. Actuators* B29, 199, 1995
3. J.R. Lakowicz, H. Szmacinski, *Sens. Actuators* B11, 133, 1993
4. J.R. Lakowicz, H. Szmacinski, M. Karakelle, *Anal. Chim Acta* 272, 179, 1993
5. J. Sipior, S. Bambot, M. Romauld, G.M. Carter, J.R. Lakowicz, G. Rao, *Anal. Biochem.* 227, 309, 1995
6. A. Mills, Q. Chang, *Analyst,* 118, 839, 1993
7. C. Preininger, G.J. Mohr, I.Klimant, O.S. Wolfbeis, *Anal. Chim. Acta,* 334, 113, 1996
8. U.E. Spichinger, D. Freiner, E. Bakker, T. Rosatzin, W. Simon, *Sens. Actuators* B11, 262, 1993

**Patentansprüche**

**1.** Verfahren zur Lumineszenzbestimmung eines biologischen, chemischen oder physikalischen Parameters einer Probe unter Verwendung zumindest zweier verschiedener Leuchtstoffe (flu, ref), deren erster (flu) zumindest in der Lumineszenzintensität auf den Parameter anspricht und deren zweiter (ref) zumindest in der Lumineszenzintensität und der Abklingzeit auf den Parameter nicht anspricht, wobei die Leuchtstoffe (flu, ref) unterschiedliche Abklingzeiten aufweisen,
**dadurch gekennzeichnet,**
**daß** die Abklingzeit des zweiten Leuchtstoffs (ref) länger ist als die des ersten Leuchtstoffs (flu) und daß das Zeit- oder Phasenverhalten der additiv überlagerten Lumineszenzantworten beider Leuchtstoffe durch einen einzigen Detektor gemessen wird und daß eine von der Gesamtintensität beider Leuchtstoffe unabhängige Referenzgröße aus dem gemessenen Zeit- oder Phasenverhalten erhalten wird und daß der Parameter unter Verwendung der Referenzgröße bestimmt wird.

**2.** Verfahren nach Anspruch 1,
**dadurch gekennzeichnet,**
**daß** die Anregungs- oder/und Emissionsspektren der Leuchtstoffe (flu,ref) einander überlappen.

**3.** Verfahren nach einem der vorhergehenden Ansprüche,
**dadurch gekennzeichnet,**
**daß** die Leuchtstoffe (flu,ref) durch eine einzige Lichtquelle gemeinsam erregt werden.

**4.** Verfahren nach einem der vorhergehenden Ansprüche,
**dadurch gekennzeichnet,**
**daß** die Leuchtstoffe (flu,ref) gleichzeitig, insbesondere mit gleichzeitigem Erregungsanfang und gleicher Erregungsdauer, erregt werden.

**5.** Verfahren nach einem der Ansprüche 1 bis 3,
**dadurch gekennzeichnet,**
**daß** als Referenzgröße eine gemessene Phasenverschiebung ($\Phi_m$) der Phasen des Summensignals (ges) beider Leuchtstoffe verwendet wird.

**6.** Verfahren nach einem der Ansprüche 1 bis 3,
**dadurch gekennzeichnet,**
**daß** als Referenzgröße ein Verhältnis beider Intensitäten I1 und I2 über die Zeit verwendet wird, wobei I1 die gemessene Intensität über die Zeit des emittierten Lichtes beider Leuchtstoffe (flu, ref) bei eingeschalteter Lichtquelle bedeutet und I2 die gemessene Intensität über die Zeit des emittierten Lichtes des Referenzfarbstoffes (ref) nach Abschalten der Belichtung bedeutet.

**7.** Verfahren nach Anspruch 1,
**dadurch gekennzeichnet,**
**daß** der kurzlebige Leuchtstoff (flu) an der Oberfläche von Partikeln, die den langlebigen Leuchtstoff (ref) enthalten, fixiert ist und die Partikel ohne zusätzlichen Träger direkt in die Probe eingebracht werden.

**8.** Verfahren nach Anspruch 1,
**dadurch gekennzeichnet,**
**daß** der zu messende chemische Parameter in der Probe der pH-Wert, die Konzentration bestimmter verschiedener ionischer Verbindungen wie z.B. Kalium, Calcium, Nitrat, Chlorid und verschiedener Schwermetalle oder die Konzentration gasförmiger Komponenten wie z.B. $CO_2$ und $NH_3$ oder das Redoxpotential ist.

**9.** Verfahren nach Anspruch 1,
**dadurch gekennzeichnet,**
**daß** der zu messende biologische Parameter die Konzentration eines lumineszenzmarkierten Antikörpers oder Antigens ist.

**10.** Vorrichtung zur Lumineszenzbestimmung eines biologischen, chemischen oder physikalischen Parameters einer Probe, umfassend: ein Sensormittel, das zumindest zwei verschiedene Leuchtstoffe (flu,ref) aufweist, deren erster (flu) zumindest in der Lumineszenzintensität auf den Parameter anspricht und deren zweiter (ref) zumindest in der Lumineszenzintensität und der Abklingzeit auf den Parameter nicht anspricht, wobei die Leuchtstoffe (flu, ref) unterschiedliche Abklingzeiten aufweisen,
**dadurch gekennzeichnet,**
**daß** die Abklingzeit des zweiten Leuchtstoffs (ref) länger ist als die des ersten Leuchtstoffs (flu) und daß das Zeit- oder Phasenverhalten der additiv überlagerten Lumineszenzantworten beider Leuchtstoffe durch einen einzigen Detektor gemessen wird und daß eine von der Gesamtintensität beider Leuchtstoffe unabhängige Referenzgröße aus dem gemessenen Zeit- oder Phasenverhalten erhalten wird und daß der Parameter unter Verwendung der Referenzgröße bestimmt wird.

**11.** Vorrichtung nach Anspruch 10,
**dadurch gekennzeichnet,**
**daß** die Anregungs- oder/und die Emissionsspektren der Leuchtstoffe (flu.ref) einander überlappen.

**12.** Vorrichtung nach Anspruch 10 oder 11,
**dadurch gekennzeichnet,**
**daß** die Vorrichtung zur gemeinsamen Erregung der Leuchtstoffe (flu,ref) eine einzige Lichtquelle besitzt.

**13.** Vorrichtung nach einem der Ansprüche 10 bis 12,
**dadurch gekennzeichnet,**
**daß** die Vorrichtung ausgelegt ist, um die Referenzgröße aufgrund einer gemessenen Phasenverschiebung ($\Phi_m$) der Phasen des Summensignals (ges) beider Leuchtstoffe zu bestimmen.

**14.** Vorrichtung nach einem der Ansprüche 10 bis 12,
**dadurch gekennzeichnet,**
**daß** die Vorrichtung dazu ausgelegt ist, um die Referenzgröße als Verhältnis beider Intensitäten 11 und 12 über die Zeit zu bestimmen, wobei I1 die gemessene Intensität über die Zeit des emittierten Lichtes beider Leuchtstoffe (flu, ref) bei eingeschalteter Lichtquelle bedeutet und I2 die gemessene Intensität über die Zeit des emittierten Lichtes des Referenzfarbstoffes (ref) nach Abschalten der Belichtung bedeutet.

**15.** Vorrichtung nach Anspruch 10,
**dadurch gekennzeichnet,**
**daß** der kurzlebige Leuchtstoff (flu) an der Oberfläche von Partikeln, die den langlebigen Leuchtstoff (ref) enthalten, fixiert ist.

**16.** Vorrichtung nach Anspruch 10,
**dadurch gekennzeichnet,**
**daß** der langlebige Leuchtstoff (ref) aus der Gruppe der lumineszierenden Übergangsmetallkomplexe mit Ru, Re, Os, Rh, Ir oder Pt als Zentralatom und $\alpha$-Diiminliganden stammt.

**17.** Vorrichtung nach Anspruch 16,
**dadurch gekennzeichnet,**
**daß** der kurzlebige Leuchtstoff (flu) ein pH-sensitiver Lumineszenzindikator ist.

**18.** Vorrichtung nach Anspruch 16,

**dadurch gekennzeichnet,**
**daß** der kurzlebige Leuchtstoff (flu) ein chelatbildender Lumineszenzindikator ist.

**Claims**

1. Method for determining the luminescence of a biological, chemical or physical parameter of a sample using at least two different luminescent substances (flu, ref) the first of which (flu) responds to the parameter at least as regards luminescence intensity and the second of which (ref) does not respond to the parameter at least as regards luminescence intensity and decay time, the luminescent substances (flu, ref) having different decay times
   **characterized in that**
   the decay time of the second luminescent substance (ref) is longer than that of the first luminescent substance (flu) and the time or phase behaviour of the additively superimposed luminescence responses of the two luminescent substances is measured by a single detector and a reference quantity that is independent of the total intensity of the two luminescent substances is obtained from the measured time or phase behaviour and the parameter is determined using the reference quantity.

2. Method as claimed in claim 1,
   **characterized in that**
   the excitation or/and emission spectra of the luminescent substances (flu, ref) overlap.

3. Method as claimed in one of the previous claims,
   **characterized in that**
   the luminescent substances (flu, ref) are jointly excited by a single light source.

4. Method as claimed in one of the previous claims,
   **characterized in that**
   the luminescent substances (flu, ref) are excited simultaneously, in particular with a simultaneous start of excitation and equal duration of excitation.

5. Method as claimed in one of the claims 1 to 3,
   **characterized in that**
   a measured phase shift ($\Phi$m) of the phases of the sum signal (ges) of the two luminescent substances is used.

6. Method as claimed in one of the claims 1 to 3,
   **characterized in that**
   a ratio of the two intensities 11 and 12 over time is used as the reference quantity in which 11 denotes the measured intensity over time of the emitted light of the two luminescent substances (flu, ref) when the light source is switched on and 12 denotes the measured intensity over time of the emitted light of the reference dye (ref) after switching off the illumination.

7. Method as claimed in claim 1,
   **characterized in that**
   the short-lived luminescent substance (flu) is immobilized on the surface of particles which contain the long-lived luminescent substance (ref) and the particles are introduced directly into the sample without an additional support.

8. Method as claimed in claim 1,
   **characterized in that**
   the chemical parameter to be measured in the sample is the pH value, the concentration of certain different ionic compounds such as potassium, calcium, nitrate, chloride and different heavy metals or the concentration of gaseous components such as $CO_2$ and $NH_3$ or the redox potential.

9. Method as claimed in claim 1,
   **characterized in that**
   the biological parameter to be measured is the concentration of a luminescent-labelled antibody or antigen.

10. Device for determining the luminescence of a biological, chemical or physical parameter of a sample comprising:
    a sensor means which has at least two different luminescent substances (flu, ref) the first of which (flu) responds to the parameter at least as regards luminescence intensity and the second of which (ref) does not respond to the parameter at least as regards luminescence intensity and decay time, the luminescent substances (flu, ref) having different decay times,
**characterized in that**
the decay time of the second luminescent substance (ref) is longer than that of the first luminescent substance (flu) and the time or phase behaviour of the additively superimposed luminescence responses of the two luminescent substances is measured by a single detector and a reference quantity that is independent of the total intensity of the two luminescent substances is obtained from the measured time or phase behaviour and the parameter is determined using the reference quantity.

11. Device as claimed in claim 10,
**characterized in that**
the excitation or/and emission spectra of the luminescent substances (flu, ref) overlap.

12. Device as claimed in claim 10 or 11,
**characterized in that**
the device has a single light source for jointly exciting the luminescent substances (flu, ref).

13. Device as claimed in one of the claims 10 to 12,
**characterized in that**
the device is designed to determine the reference quantity on the basis of a measured phase shift ($\Phi m$) of the phases of the sum signal (ges) of the two luminescent substances.

14. Device as claimed in one of the claims 10 to 12,
**characterized in that**
the device is designed to determine the reference quantity as a ratio of the two intensities 11 and 12 over time in which 11 denotes the measured intensity over time of the emitted light of the two luminescent substances (flu, ref) when the light source is switched on and 12 denotes the measured intensity over time of the emitted light of the reference dye (ref) after the illumination has been switched off.

15. Device as claimed in claim 10,
**characterized in that**
the short-lived luminescent substance (flu) is immobilized on the surface of particles which contain the long-lived luminescent substance (ref).

16. Device as claimed in claim 10,
**characterized in that**
the long-lived luminescent substance (ref) is derived from the group of luminescent transition metal complexes containing Ru, Re, Os, Rh, Ir or Pt as the central atom and $\alpha$-diimine ligands.

17. Device as claimed in claim 16,
**characterized in that**
the short-lived luminescent substance (flu) is a pH-sensitive luminescence indicator.

18. Device as claimed in claim 16,
**characterized in that**
the short-lived luminescent substance (flu) is a chelate-forming luminescence indicator.

**Revendications**

1. Procédé de détermination par luminescence d'un paramètre biologique, chimique ou physique d'un échantillon, moyennant l'utilisation d'au moins deux luminophores différents (flu, ref) dont le premier (flu) réagit au paramètre au moins dans l'intensité de la luminescence et dont le deuxième (ref) ne réagit pas au paramètre au moins dans l'intensité de la luminescence et dans le temps de retour à zéro, les luminophores (flu, ref) présentant des temps de retour à zéro distincts, **caractérisé en ce que** le temps de retour à zéro du deuxième luminophore (ref) est plus long que celui du premier luminophore (flu), **en ce que** le comportement en temps ou en phase des réponses de luminescence superposées additivement des deux luminophores est mesuré par un seul détecteur, **en ce**

**qu'**une grandeur de référence indépendante de l'intensité totale des deux luminophores est obtenue à partir du comportement mesuré en temps ou en phase, et **en ce que** le paramètre est déterminé en utilisant la grandeur de référence.

2. Procédé selon la revendication 1, **caractérisé en ce que** les spectres d'excitation et / ou d'émission des luminophores (flu, ref) se chevauchent.

3. Procédé selon l'une des revendications précédentes, **caractérisé en ce que** les luminophores (flu, ref) sont excités ensemble par une source de lumière unique.

4. Procédé selon l'une des revendications ci-avant, **caractérisé en ce que** les luminophores (flu, ref) sont excités en même temps, en particulier avec des débuts d'excitation simultanés et des durées d'excitation égales

5. Procédé selon l'une des revendications 1 à 3, **caractérisé en ce qu'**un décalage de phase mesuré ($\Phi_m$) des phases du signal somme (ges) des deux luminophores est utilisé comme grandeur de référence.

6. Procédé selon l'une des revendications 1 à 3, **caractérisé en ce qu'**un rapport des deux intensités I1 et I2 en fonction du temps est utilisé comme grandeur de référence, I1 signifiant l'intensité mesurée en fonction du temps de la lumière émise par les deux luminophores (flu, ref) quand la source de lumière est allumée, et I2 l'intensité mesurée en fonction du temps de la lumière émise du colorant de référence (ref) après extinction de l'éclairage.

7. Procédé selon la revendication 1, **caractérisé en ce que** le luminophore de courte longévité (flu) est fixé à la surface de particules qui contiennent le luminophore de grande longévité (ref) et **en ce que** les particules sont introduites directement dans l'échantillon sans porteur supplémentaire.

8. Procédé selon la revendication 1, **caractérisé en ce que** le paramètre chimique à mesurer dans l'échantillon est le pH, la concentration de différents composés ioniques déterminés comme par exemple le potassium, le calcium, le nitrate, le chlorure et différents métaux lourds, ou la concentration de composants gazeux tels par exemple $CO_2$ et $NH_3$, ou le potentiel rédox.

9. Procédé selon la revendication 1, **caractérisé en ce que** le paramètre biologique à mesurer est la concentration d'un anticorps ou d'un antigène marqués par luminescence.

10. Dispositif de détermination par luminescence d'un paramètre biologique, chimique ou physique d'un échantillon, qui comprend un moyen de détection, lequel présente au moins deux luminophores différents (flu, ref), dont le premier (flu) réagit au paramètre au moins dans l'intensité de la luminescence, et dont le deuxième (ref) ne réagit pas au paramètre au moins dans l'intensité de la luminescence et dans le temps de retour à zéro, les luminophores (flu, ref) présentant des temps de retour à zéro distincts, **caractérisé en ce que** le temps de retour à zéro du deuxième luminophore (ref) est plus long que celui du premier luminophore (flu) et **en ce que** le comportement en temps ou en phase des réponses de luminescence superposées additivement des deux luminophores est mesuré par un seul détecteur, et **en ce qu'**une grandeur de référence indépendante de l'intensité totale des deux luminophores est obtenue à partir du comportement mesuré en temps ou en phase, et **en ce que** le paramètre est déterminé en utilisant la grandeur de référence.

11. Dispositif selon la revendication 10, **caractérisé en ce que** les spectres d'excitation et / ou d'émission des luminophores (flu, ref) se chevauchent.

12. Dispositif selon l'une des revendications 10 ou 11, **caractérisé en ce que** le dispositif possède une source de lumière unique pour l'excitation commune des luminophores (flu, ref).

13. Dispositif selon l'une des revendications 10 à 12, **caractérisé en ce que** le dispositif est conçu pour déterminer la grandeur de référence par suite d'un décalage de phase mesuré ($\Phi_m$) des phases du signal somme (ges) des deux luminophores.

14. Dispositif selon l'une des revendications 10 à 12, **caractérisé en ce que** le dispositif est conçu pour déterminer la grandeur de référence comme rapport des deux intensités I1 et I2 en fonction du temps, I1 signifiant l'intensité mesurée en fonction du temps de la lumière émise des deux luminophores (flu, ref) quand la source de lumière est allumée, et I2 l'intensité mesurée en fonction du temps de la lumière émise du colorant de référence (ref) après extinction de l'éclairage.

**15.** Dispositif selon la revendication 10, **caractérisé en ce que** le luminophore de courte longévité (flu) est fixé à la surface de particules qui contiennent le luminophore de grande longévité (ref).

**16.** Dispositif selon la revendication 10, **caractérisé en ce que** le luminophore de grande longévité (ref) provient du groupe des complexes luminescents des métaux de transition avec le Ru, le Re, l'Os, le Rh, l'Ir ou le Pt comme atome central et une diimine $\alpha$ comme ligand.

**17.** Dispositif selon la revendication 16, **caractérisé en ce que** le luminophore de courte longévité (flu) est un indicateur luminescent sensible au pH.

**18.** Dispositif selon la revendication 16, **caractérisé en ce que** le luminophore de courte longévité (flu) est un indicateur luminescent chélateur.

FIG. 1

FIG. 2

FIG. 3

Lichtpuls

pH 8

pH 7

pH 6

$I_1/I_2 = R = f(pH)$

pH 1

Lumineszezintensität

$I_1$

$I_2$

Zeit

FIG. 4

FIG. 5

FIG. 6